# EUROPÄISCHE PATENTSCHRIFT

(11) **EP 3 979 393 B1**
(45) Veröffentlichungstag und Bekanntmachung des Hinweises auf die Patenterteilung: **21.12.2022**
(21) Anmeldenummer: 20199326.8
(22) Anmeldetag: 30.09.2020
(51) Int. Cl.: H01M 10/60, H01M 10/625, H01M 10/643, H01M 10/647, H01M 10/65, H01M 10/6557, H01M 10/66

(54) **ENERGIESPEICHERSYSTEM MIT TEMPERIEREINRICHTUNG**
ENERGY STORAGE SYSTEM WITH TEMPERING DEVICE
SYSTÈME D'ACCUMULATION D'ÉNERGIE POURVU DE DISPOSITIF DE MISE EN TEMPÉRATURE

(43) Veröffentlichungstag der Anmeldung: 06.04.2022
(73) Patentinhaber: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE)
(74) Vertreter: Reiser & Partner Patentanwälte mbB

(56) Entgegenhaltungen:
- WO-A1-2019/046871
- DE-A1-102015 221 272
- FR-A1- 2 782 399
- US-A1- 2008 311 468

## Beschreibung

Die Erfindung betrifft ein Energiespeichersystem, umfassend ein Gehäuse, in welchem mehrere Energiespeicherzellen angeordnet sind, wobei in dem Gehäuse eine Temperiereinrichtung angeordnet ist, wobei die Temperiereinrichtung die Energiespeicherzellen zumindest abschnittsweise kontaktiert, wobei die Temperiereinrichtung eine zumindest abschnittsweise an die Form der Energiespeicherzellen angepasste Gestalt aufweist. Die Erfindung betrifft auch ein Fahrzeug mit einem derartigen Energiespeichersystem.

Ein derartiges Energiespeichersystem ist beispielsweise aus der WO 2019/046871 A1 bekannt. Derartige Energiespeichersysteme eignen sich insbesondere für stationäre Systeme und für den Einsatz in mobilen Systemen, beispielsweise in Fahrzeugen mit rein elektrischem oder ergänzend elektrifiziertem Antrieb. Ein für die Elektromobilität häufig eingesetztes Energiespeichersystem umfasst wiederaufladbare Energiespeicherzellen in Form von Akkumulatoren, wobei Lithium-Ionen-Akkumulatoren besonders häufig eingesetzt werden. Derartige Akkumulatoren setzen sich aus mehreren Energiespeicherzellen zusammen, welche gemeinsam in einem Gehäuse verbaut sind. Dabei bildet das Gehäuse, welches mehrere Energiespeicherzellen aufnimmt, ein Energiespeichermodul.

Elektrochemische Akkumulatoren, wie beispielsweise Lithium-Ionen-Akkumulatoren, weisen die höchstmögliche Kapazität nur in einem kleinen Temperaturspektrum auf. Daher ist es je nach Umgebungsbedingungen erforderlich, die in dem Gehäuse angeordneten Energiespeicherzellen zu kühlen oder zu erwärmen. Hierzu ist es aus dem oben genannten Stand der Technik bekannt, in dem Gehäuse eine Temperiereinrichtung mit Schläuchen anzuordnen, wobei die Schläuche zwischen den Energiespeicherzellen plaziert sind. Dabei sind die Schläuche flexibel und schmiegen sich an die Energiespeicherzellen an, wenn ein unter Druck stehendes Temperiermedium durch die Temperiereinrichtung gefördert wird. Hierbei ist aber problematisch, dass durch die schlauchartige Temperiereinrichtung eine mechanische Kraft auf die Energiespeicherzellen ausgeübt werden kann, insbesondere, wenn ein unter Druck stehendes Temperiermedium durch die Temperiereinrichtung gefördert wird. Mechanische Kräfte können auch aus Bremsvorgängen oder Kurvenfahrten resultieren und Schäden an dem Energiespeichersystem hervorrufen. Des Weiteren ist problematisch, dass sich in Abhängigkeit der Druckverhältnisse im Inneren der Temperiereinrichtung die Kontaktfläche zwischen Temperiereinrichtung und Energiespeicherzellen verringern kann, was zu lokalen Überhitzungen und Beschädigungen führen kann.

Der Erfindung liegt die Aufgabe zugrunde, eine Temperiereinrichtung für ein Energiespeichersystem bereitzustellen, welches bei einfacher Montierbarkeit eine hohe Wärmeübertragung bei gleichzeitig guten mechanischen Eigenschaften ermöglicht.

Diese Aufgabe wird mit den Merkmalen von Anspruch 1 gelöst. Auf vorteilhafte Ausgestaltungen nehmen die Unteransprüche Bezug.

Das erfindungsgemäße Energiespeichersystem umfasst ein Gehäuse, in welchem mehrere Energiespeicherzellen angeordnet sind, wobei in dem Gehäuse eine Temperiereinrichtung angeordnet ist, wobei die Temperiereinrichtung die Energiespeicherzellen zumindest abschnittsweise kontaktiert, wobei die Temperiereinrichtung eine zumindest abschnittsweise an die Form der Energiespeicherzellen angepasste Gestalt aufweist, wobei die Temperiereinrichtung als Blasformteil ausgebildet ist. Dementsprechend ist die Temperiereinrichtung aus einem formstabilen Kunststoff, vorzugsweise einem formstabilen thermoplastischen Kunststoff, ausgebildet.

Die Formgebung der Temperiereinrichtung erfolgt an Ort und Stelle innerhalb des Gehäuses und zwischen den Energiespeicherzellen. Zur Herstellung der Temperiereinrichtung wird zwischen den Energiespeicherzellen ein Vorformling angeordnet und mittels Blasformen in Form gebracht. Dabei schmiegt sich der Vorformling an die Energiespeicherzellen an, so dass eine besonders große Kontaktfläche zwischen Energiespeicherzellen und Temperiereinrichtung entsteht. Daraus wiederum resultiert ein besonders guter Wärmeübergang. Nach Abschluss des Blasformvorgangs ist die Temperiereinrichtung formstabil, wodurch insbesondere im Betrieb des Energiespeichersystems keine mechanischen Lasten auf die Energiespeicherzellen übertragen werden.

Dadurch, dass die Temperiereinrichtung formstabil ist, kann diese aber auch als Stützeinrichtung fungieren und die Energiespeicherzellen an Ort und Stelle fixieren. Des Weiteren ergibt sich dadurch, dass die Temperiereinrichtung als Blasformteil ausgebildet ist, eine große Flexibilität hinsichtlich der Anordnung und der Ausgestaltung der Energiespeicherzellen. Insbesondere ist es nicht erforderlich, je nach Anordnung der Energiespeicherzellen und Ausgestaltung der Energiespeicherzellen die Gestalt der Temperiereinrichtung zu ändern. Die Formgebung der Temperiereinrichtung erfolgt selbsttätig während des Blasformvorgangs, so dass eine große Formenvielfalt für die Temperiereinrichtung realisierbar ist.

Die Energiespeicherzellen können als Rundzellen ausgebildet sein. Derartige Energiespeicherzellen sind zylindrisch ausgebildet und werden aufrecht stehend oder liegend in dem Gehäuse angeordnet. Die Temperiereinrichtung schmiegt sich dabei an den Umfang der zylindrisch ausgebildeten Rundzellen an. Durch die im Zuge des Blasformens ausgeformte Temperiereinrichtung ist dabei ein großflächiger Kontakt der Temperiereinrichtung an die zylindrische Wand der Rundzellen gegeben. Dabei ist der Durchmesser und auch die Höhe der Rundzellen unerheblich, da die Formgebung der Temperiereinrichtung in Abhängigkeit der Gestalt der Energiespeicherzellen selbsttätig erfolgt. In alternativen Ausgestaltungen können die Energiespeicherzellen beispielsweise auch als Pouch-Zellen oder als prismatische Zellen ausgebildet sein.

Die Temperiereinrichtung kann zumindest einen Strömungskanal aufweisen. Dazu ist die Temperiereinrichtung als Hohlkörper mit einem Strömungskanal ausgebildet. Durch den Strömungskanal kann Temperiermedium durch die Temperiereinrichtung strömen und dabei von den Energiespeicherzellen emittierte Wärme aufnehmen oder Wärme an die Energiespeicherzellen abgeben. In vorteilhaften Ausgestaltungen ist auch denkbar, dass ein Strömungskanal in mehrere Teilkanäle aufgeteilt ist, welche beispielsweise durch eine Membran oder eine Wand voneinander getrennt sind.

Die Temperiereinrichtung kann Kontaktabschnitte aufweisen, wobei sich die Kontaktabschnitte an die Außenkontur der Energiespeicherzellen anschmiegen. Dadurch ergibt sich ein besonders großflächiger Kontakt zwischen Temperiereinrichtung und Energiespeicherzellen.

Die Temperiereinrichtung kann mehrere Strömungskanäle aufweisen. Bei dieser Ausgestaltung werden zwischen den Energiespeichern mehrere separat voneinander ausgebildete Vorformlinge angeordnet, wobei jeder Vorformling jeweils einen Strömungskanal bildet. Dadurch weisen die Strömungskanäle eine einfache Gestalt auf und die Vorformlinge sind einfach montierbar. Des Weiteren ist denkbar, dass durch die Strömungskanäle ein an den Wärme- oder Kältebedarf angepasstes Temperiermedium strömt. In diesem Zusammenhang ist beispielsweise denkbar, dass in einem lokal begrenzten Störfall die angrenzenden Strömungskanäle mit einem hohen Volumenstrom durchströmenden Temperiermediums oder mit einem kälteren Temperiermedium beaufschlagt werden.

Die Strömungskanäle können einströmseitig und/oder ausströmseitig mit einem Sammler verbunden sein. Dadurch können alle oder zumindest ein Teil der Strömungskanäle einfach mit Temperiermedium versorgt werden. Zwischen Sammler und Strömungskanälen können dabei zur Steuerung des Volumenstroms des die Strömungskanäle durchströmenden Temperiermediums schaltbare Ventile angeordnet sein. Ebenso wie die Strömungskanäle können auch die Sammler als Blasformteile ausgebildet sein.

Das Energiespeichersystem kann Bestandteil eines Fahrzeugs sein. Dabei stellt das Energiespeichersystem elektrische Energie für einen elektrischen Antrieb bereit. Die erfindungsgemäße Ausgestaltung der Temperiereinrichtung in Form eines Blasformteils ist in diesem Zusammenhang besonders vorteilhaft, weil die Temperiereinrichtung an die Gestalt der Energiespeicherzellen angepasst ist. Dadurch ist zum einen ein flächiger und leistungsfähiger Wärmeübergang zwischen Temperiereinrichtung und Energiespeicherzellen gegeben und zum anderen kann die Temperiereinrichtung auf die Energiespeicherzellen während des Fahrbetriebs einwirkende Kräfte, insbesondere beim Bremsen und bei Kurvenfahrten, abfangen.

Der Sammler kann mit dem Kühlkreislauf eines Fahrzeugs in Wirkverbindung stehen. Bei dieser Ausgestaltung ist die Temperiereinrichtung des Energiespeichersystems an den leistungsfähigen Kühlkreislauf des Fahrzeugs angebunden. Dabei kann der Sammler direkt oder indirekt mit dem Kühlkreislauf verbunden sein.

Die Temperiereinrichtung kann mäanderförmig ausgebildet sein. Dabei umgibt die Temperiereinrichtung bogenförmig mehrere Energiespeicherzellen, die regelmäßig angeordnet sein können und durch die Temperiereinrichtung in mehrere Reihen getrennt werden.

Die Temperiereinrichtung kann aus thermoplastischem Kunststoff ausgebildet sein. Thermoplastische Kunststoffe sind einfach mittels Blasformen verarbeitbar. Zur Verbesserung der Wärmeleitfähigkeit kann der thermoplastische Kunststoff mit Additiven versehen sein. Mögliche Additive sind beispielsweise metallische oder kohlenstoffhaltige Partikel. Des Weiteren kann die Matrix des thermoplastischen Kunststoffs zur Verbesserung der mechanischen Eigenschaften mit einer Faserverstärkung versehen sein.

Ein erfindungsgemäßes Fahrzeug umfasst einen zumindest unterstützenden elektrischen Antrieb und ein Energiespeichersystem mit einer Temperiereinrichtung wie zuvor beschrieben.

Die Aufgabe der Erfindung wird auch gelöst durch ein Verfahren zur Herstellung einer Temperiereinrichtung für einen Energiespeicher, umfassend eine Anordnung von Energiespeicherzellen, bei welchem ein Vorformling in der Anordnung von Energiespeicherzellen angeordnet wird und die Temperiereinrichtung mittels Blasformen aus dem Vorformling ausgebildet wird. Dementsprechend werden bei dem erfindungsgemäßen Verfahren zunächst die Energiespeicherzellen in dem Gehäuse angeordnet und gegebenenfalls in dem Gehäuse befestigt. Anschließend wird der Vorformling zwischen den Energiespeicherzellen angeordnet, wobei die Anordnung des Vorformlings mäanderförmig erfolgen kann. Alternativ können mehrere Vorformlinge zwischen den Energiespeicherzellen angeordnet werden. Anschließend erfolgt die Formgebung der Temperiereinrichtung mittels Blasformen. Dabei wird das Material des Vorformlings erwärmt und unter Druck gesetzt, wodurch sich der Vorformling plastisch verformt und schmiegt sich teilweise an die Energiespeicherzellen an. Daraus resultiert eine große Kontaktfläche zwischen Temperiereinrichtung und Energiespeicherzellen. Nach Abschluss des Blasformverfahrens ist die Temperiereinrichtung formstabil und kann neben der Temperierfunktion gleichzeitig eine Abstützung für die Energiespeicherzellen bilden.

Während des Blasformens kann zumindest ein Funktionselement in die Temperiereinrichtung eingeformt oder angeordnet werden. Strömungskanäle von Temperierkreisläufen können mehrere für die Funktionsfähigkeit der Temperiereinrichtung erforderliche Funktionselemente enthalten. Dies sind beispielsweise Drosselventile, Rückschlagventile, schaltbare Ventile, Pumpen, Durchflusssensoren und/oder Temperatursensoren. Bei dem erfindungsgemäßen Energiespeichersystem kann zumindest eines der zuvor beschriebenen Funktionselemente in der Temperiereinrichtung, beispielsweise innerhalb eines Strömungskanals, angeordnet sein, so dass das Funktionselement mit dem Temperiermedium in Kontakt steht.

Durch die Anordnung des Funktionselementes innerhalb des Energiespeichersystems, zwischen den Energiespeicherzellen, können Zustandsparameter des Temperiermediums direkt in den zu temperierenden Bereichen erfasst und auch beeinflusst werden. Dabei kann das Funktionselement gemäß einer ersten Ausgestaltung direkt aus dem Grundkörper ausgeformt sein, was insbesondere für passive Elemente wie Drosselventile in Betracht kommt. Alternativ können Funktionselemente in dem Vorformling so angeordnet werden, dass diese nach dem Blasformen positionsrichtig in der Temperiereinrichtung angeordnet sind.

Einige der Ausgestaltungen des erfindungsgemäßen Energiespeichersystems werden nachfolgend anhand der Figuren näher erläutert. Diese zeigen, jeweils schematisch:
- Fig. 1: ein Energiespeichersystem mit mehreren Strömungskanälen;
- Fig. 2: ein Energiespeichersystem mit einer mäanderförmigen Temperiereinrichtung;
- Fig. 3: die Herstellung eines Energiespeichersystems gemäß Fig. 1;
- Fig. 4: die Herstellung eines Energiespeichersystems mit Energiespeicherzellen in Form von prismatischen Zellen.

Die Figuren zeigen ein Energiespeichersystem 1, umfassend ein Gehäuse 2, in welchem mehrere Energiespeicherzellen 3 angeordnet sind. Dabei können die Energiespeicherzellen 3 in einer ersten Ausgestaltung als Rundzellen und in einer zweiten Ausgestaltung als Pouch-Zellen ausgebildet sein. Alternativ können die Energiespeicherzellen 3 aber auch in Form von prismatischen Zellen ausgebildet sein. Das hier beschriebene Energiespeichersystem 1 speichert elektrische Energie für den elektrischen Antrieb und von Nebenaggregaten eines Elektrofahrzeugs.

In dem Gehäuse 2 ist eine Temperiereinrichtung 4 angeordnet, wobei die Temperiereinrichtung 4 die Energiespeicherzellen 3 zumindest abschnittsweise kontaktiert. Dabei weist die Temperiereinrichtung 4 eine abschnittsweise an die Form der Energiespeicherzellen 3 angepasste Gestalt auf.

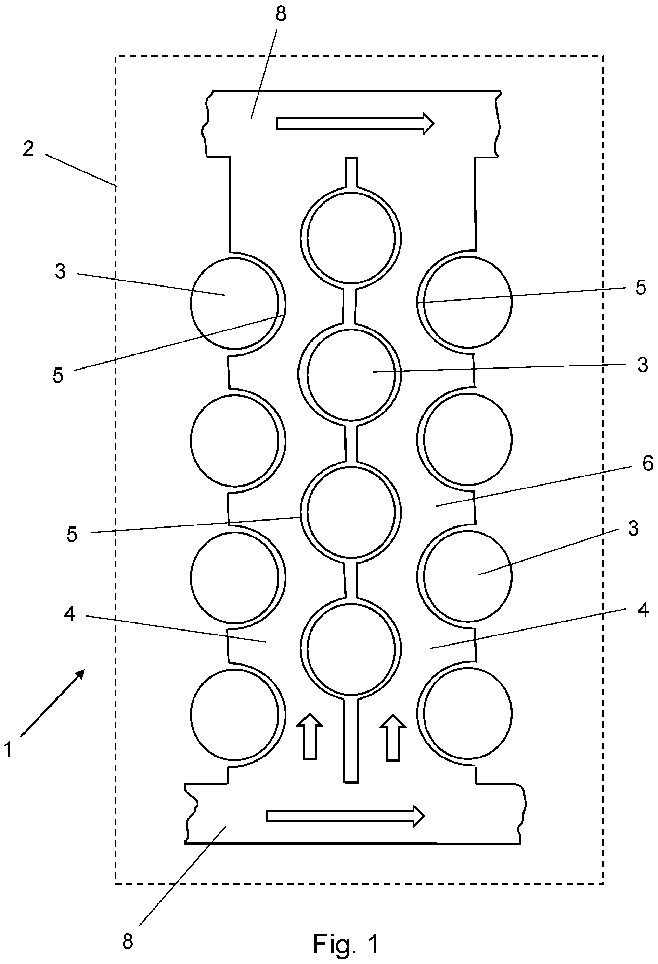

Bei der Ausgestaltung gemäß Figur 1 sind die Energiespeicherzellen 3 in Form von Rundzellen ausgebildet und aufrecht stehend in einem Gehäuse 2 plaziert. In dem Gehäuse 2 ist ferner eine Temperiereinrichtung 4 umfassend mehrere Strömungskanäle 6 angeordnet. Dabei sind die Strömungskanäle 6 so zwischen den Energiespeicherzellen 3 angeordnet, dass die Energiespeicherzellen 3 in Reihen angeordnet sind. Die Temperiereinrichtung 4 in Form der Strömungskanäle 6 weist Kontaktabschnitte 5 auf, wobei sich die Kontaktabschnitte 5 an die Außenkontur der Energiespeicherzellen 3 anschmiegen.

Die Strömungskanäle 6 sind einströmseitig und ausströmseitig mit einem Sammler 8 verbunden. Einströmseitig wird über den Sammler 8 Temperiermedium in Richtung der Strömungskanäle 6 gefördert und über den ausströmseitig angeordneten Sammler 8 wird das Temperiermedium aus den Strömungskanälen 6 wegtransportiert. Die Sammler 8 sind, ebenso wie die Strömungskanäle 6, als Blasformteil ausgebildet. Der Sammler 8 steht mit dem Kühlkreislauf des elektrisch angetriebenen Fahrzeugs in Wirkverbindung.

Die Temperiereinrichtung 4 mit Strömungskanälen 6 und Sammler 8 besteht aus thermoplastischem Werkstoff. Zur Verbesserung der Wärmeleitfähigkeit ist die Matrix des thermoplastischen Werkstoffs mit wärmeleitenden Partikeln in Form von Metall- oder Kohlenstoffpulver versehen.

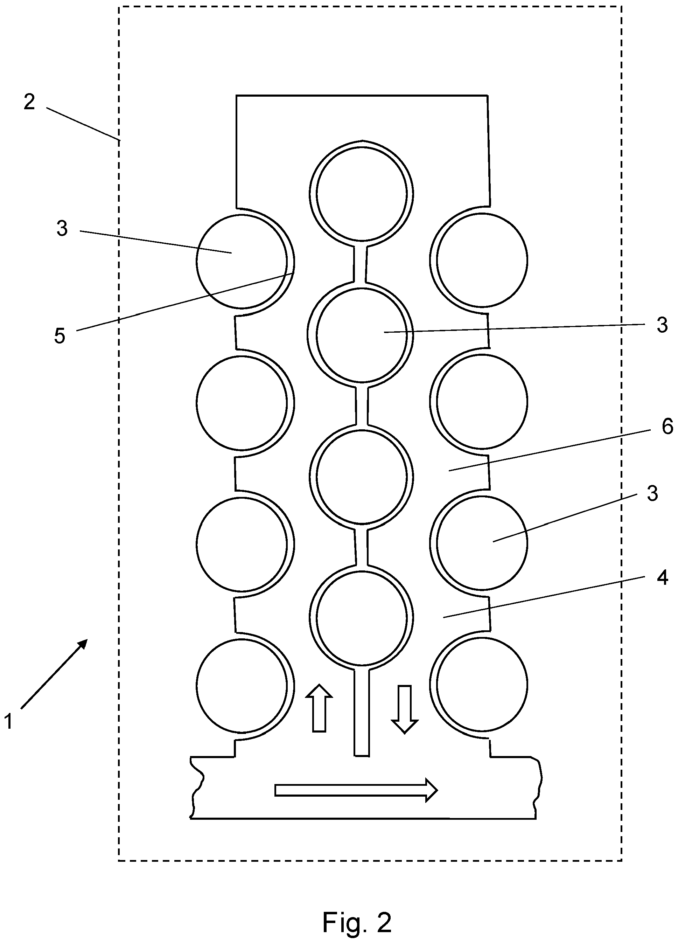

Figur 2 zeigt eine alternative Ausgestaltung des in Figur 1 beschriebenen Energiespeichersystems 1. Bei der vorliegenden Ausgestaltung umfasst die Temperiereinrichtung 4 einen Strömungskanal 6, welcher mäanderförmig ausgebildet ist und bogenförmig zwischen den Energiespeicherzellen 3 verläuft.

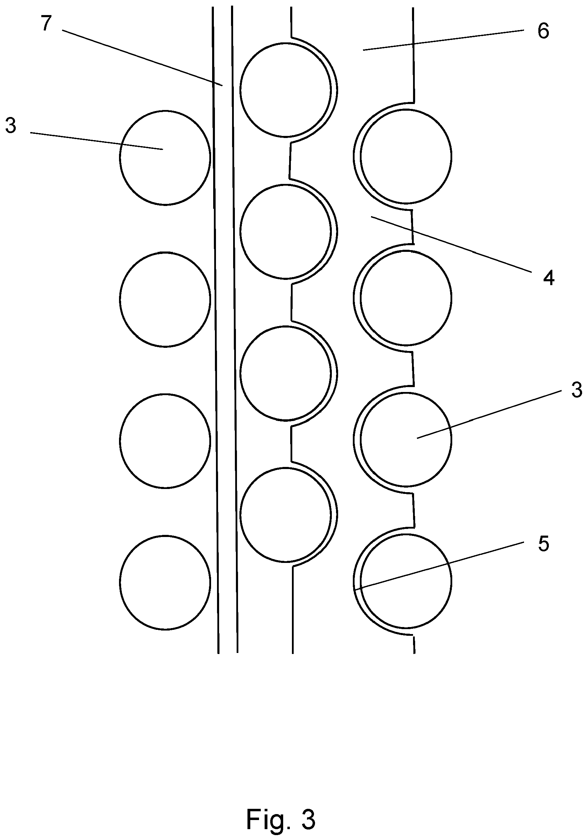

Figur 3 zeigt ein Verfahren zur Herstellung des mit der Temperiereinrichtung 4 versehenen Energiespeichersystems 1. Dabei werden zunächst die Energiespeicherzellen 3 in dem Gehäuse 2 angeordnet. Bei der vorliegenden Ausgestaltung liegen die Energiespeicherzellen 3 in Form von Rundzellen vor, welche aufrecht stehend in dem Gehäuse 2 angeordnet werden.

In einem zweiten Schritt werden Vorformlinge 7 zwischen den Energiespeicherzellen 3 angeordnet, wobei die Anordnung der Vorformlinge 7 so erfolgt, dass die Energiespeicherzellen 3 zwischen den Vorformlingen 7 in Reihen angeordnet sind. Die Vorformlinge 7 sind länglich ausgebildete Hohlkörper. In zumindest einem Vorformling 7 kann ein Funktionselement, beispielsweise ein Temperatur- und/oder Durchflusssensor, angeordnet werden.

Im nächsten Schritt wird aus den Vorformlingen 7 mittels Blasformen die Temperiereinrichtung 4 ausgebildet. Durch die während des Blasformens erfolgende plastische Verformung der Vorformlinge 7 dehnen sich die Vorformlinge 7 aus und gelangen dadurch in Kontakt mit den Energiespeicherzellen 3. Dabei schmiegen sich die Vorformlinge 7, beziehungsweise die aus den Vorformlingen 7 entstehende Temperiereinrichtung 4 mit Strömungskanälen 6, an den Umfang der Energiespeicherzellen 3 an. Aus den Strömungskanälen 6 bilden sich Kontaktabschnitte 5 aus, welche kongruent zu dem Umfang der Energiespeicherzellen 3 ausgebildet sind. Dadurch ergibt sich ein großflächiger Kontakt zwischen Temperiereinrichtung 4 und Energiespeicherzellen 3. Während des Blasformens positioniert sich das Funktionselement lagerichtig in der Temperiereinrichtung 4. Des Weiteren kann ein Funktionselement während des Blasformens direkt aus dem Vorformling 7 ausgeformt werden.

Die Strömungskanäle 6 werden anschließend mit den Sammlern 8 verbunden. Dies erfolgt vorliegend stoffschlüssig mittels einer Schweißverbindung.

Im linken Abschnitt der Darstellung ist das Energiespeichersystem 1 mit zwischen den Energiespeicherzellen 3 angeordnetem Vorformling 7 zu erkennen. In der rechten Darstellung ist die aus dem Vorformling 7 ausgeformte Temperiereinrichtung 4 zu erkennen, welche zwischen den Energiespeicherzellen 3 angeordnet und an die Form der Energiespeicherzellen 3 angepasst ist.

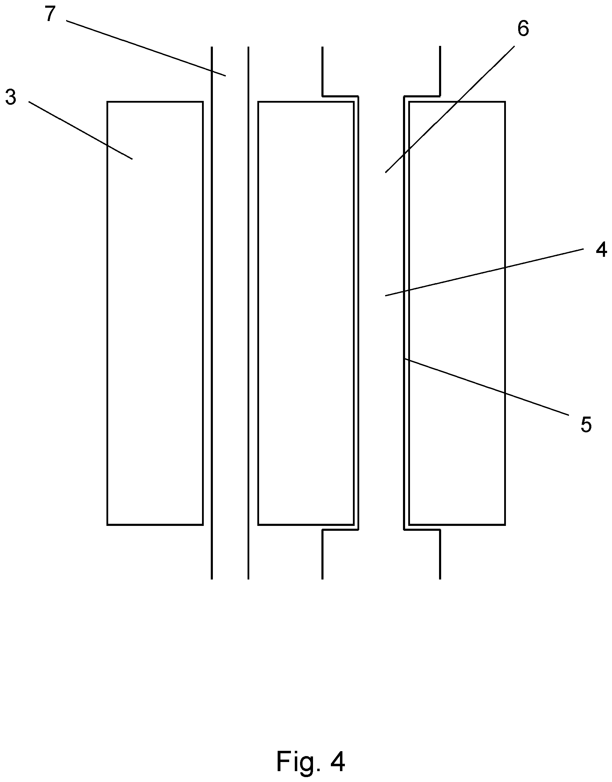

Figur 4 zeigt ein alternatives Verfahren zur Herstellung eines Energiespeichersystems 1 gemäß Figur 3. Bei der vorliegenden Ausgestaltung sind die Energiespeicherzellen 3 in Form von prismatischen Zellen ausgebildet. Auch bei dieser Ausgestaltung werden Vorformlinge 7 zwischen Energiespeicherzellen 3 angeordnet und die Temperiereinrichtung 4 mittels Blasformen aus den Vorformlingen 7 ausgebildet. Bei diesem Vorgang schmiegen sich die Vorformlinge 7 an die Außenkontur der als prismatischen Zellen vorliegenden Energiespeicherzellen 3 an, woraus ein großflächiger Kontakt zwischen Temperiereinrichtung 4 und Energiespeicherzellen 3 resultiert. Eine vergleichbare Ausgestaltung ergibt sich bei Verwendung von Energiespeicherzellen 3 in Form von Pouch-Zellen.

## Patentansprüche

1. Energiespeichersystem (1), umfassend ein Gehäuse (2) in welchem mehrere Energiespeicherzellen (3) angeordnet sind, wobei in dem Gehäuse (2) eine Temperiereinrichtung (4) angeordnet ist, wobei die Temperiereinrichtung (4) die Energiespeicherzellen (3) zumindest abschnittsweise kontaktiert, wobei die Temperiereinrichtung (4) eine zumindest abschnittsweise an die Form der Energiespeicherzellen (3) angepasste Gestalt aufweist, **dadurch gekennzeichnet, dass** die Temperiereinrichtung (4) als Blasformteil ausgebildet ist.

2. Energiespeichersystem nach Anspruch 1, **dadurch gekennzeichnet, dass** die Energiespeicherzellen (3) als Rundzellen ausgebildet sind.

3. Energiespeichersystem nach Anspruch 1, **dadurch gekennzeichnet, dass** die Energiespeicherzellen (3) als prismatische Zellen oder als Pouch-Zellen ausgebildet sind.

4. Energiespeichersystem nach einem der Ansprüche 1 bis 3, **dadurch gekennzeichnet, dass** die Temperiereinrichtung (4) zumindest einen Strömungskanal (6) aufweist.

5. Energiespeichersystem nach einem der Ansprüche 1 bis 4, **dadurch gekennzeichnet, dass** die Temperiereinrichtung (4) Kontaktabschnitte (5) aufweist, welche sich an die Außenkontur der Energiespeicherzellen (3) anschmiegen.

6. Energiespeichersystem nach einem der Ansprüche 1 bis 5, **dadurch gekennzeichnet, dass** die Temperiereinrichtung (4) mehrere Strömungskanäle (6) aufweist

7. Energiespeichersystem nach Anspruch 6, **dadurch gekennzeichnet, dass** die Strömungskanäle (6) einströmseitig und ausströmseitig mit einem Sammler (8) verbunden sind.

8. Energiespeichersystem nach einem der Ansprüche 1 bis 7, **dadurch gekennzeichnet, dass** das Energiespeichersystem (1) Bestandteil eines Fahrzeugs ist.

9. Energiespeichersystem nach Anspruch 7 oder 8, **dadurch gekennzeichnet, dass** der Sammler (8) mit dem Kühlkreislauf eines Fahrzeugs in Wirkverbindung steht.

10. Energiespeichersystem nach einem der Ansprüche 1 bis 9, **dadurch gekennzeichnet, dass** die Temperiereinrichtung (4) mäanderförmig ausgebildet ist.

11. Energiespeichersystem nach einem der Ansprüche 1 bis 10, **dadurch gekennzeichnet, dass** die Temperiereinrichtung (4) aus thermoplastischem Kunststoff ausgebildet ist.

12. Fahrzeug, umfassend einen zumindest unterstützenden elektrischen Antrieb und ein Energiespeichersystem (1) nach einem der vorherigen Ansprüche.

13. Verfahren zur Herstellung eines Energiespeichersystems (1), umfassend ein Gehäuse (2), in welchem mehrere Energiespeicherzellen (3) angeordnet sind, bei welchem Energiespeicherzellen (3) in einem Gehäuse (2) angeordnet werden, anschließend ein Vorformling (7) zwischen den Energiespeicherzellen (3) angeordnet wird und die Temperiereinrichtung (4) mittels Blasformen aus dem Vorformling (7) ausgebildet wird.

14. Verfahren nach Anspruch 13, **dadurch gekennzeichnet, dass** während des Blasformens ein Funktionselement in die Temperiereinrichtung (4) eingeformt oder angeordnet wird.

## Claims

1. An energy storage system (1), comprising a housing (2) in which several energy storage cells (3) are arranged, wherein a temperature control unit (4) is arranged in the housing (2), wherein the temperature control unit (4) contacts the energy storage cells (3) at least in sections, wherein the temperature control unit (4) has a shape which is adapted at least in sections to the shape of the energy storage cells (3), **characterized in that** the temperature control unit (4) is designed as a blow molded part.

2. The energy storage system according to claim 1, **characterized in that** the energy storage cells (3) are designed as round cells.

3. The energy storage system according to claim 1, **characterized in that** the energy storage cells (3) are prismatic cells or pouch cells.

4. The energy storage system according to any one of claims 1 to 3, **characterized in that** the temperature control unit (4) has at least one flow channel (6).

5. The energy storage system according to any one of claims 1 to 4, **characterized in that** the temperature control unit (4) has contact sections (5) which nestle up against the outer contour of the energy storage cells (3).

6. The energy storage system according to any one of claims 1 to 5, **characterized in that** the temperature control unit (4) has several flow channels (6)

7. The energy storage system according to claim 6, **characterized in that** the flow channels (6) are connected to a collector (8) on the inflow side and on the outflow side.

8. The energy storage system according to any one of claims 1 to 7, **characterized in that** the energy storage system (1) is part of a vehicle.

9. The energy storage system according to claim 7 or 8, **characterized in that** the collector (8) is operatively connected to the cooling circuit of a vehicle.

10. The energy storage system according to any one of claims 1 to 9, **characterized in that** the temperature control unit (4) is formed meander-shaped.

11. The energy storage system according to any one of claims 1 to 10, **characterized in that** the temperature control unit (4) is formed from thermoplastic material.

12. A vehicle comprising at least an assisting electric drive and an energy storage system (1) according to any one of the preceding claims.

13. A method of manufacturing an energy storage system (1) comprising a housing (2) in which several energy storage cells (3) are arranged, wherein energy storage cells (3) are arranged in a housing (2), a preform (7) is then arranged between the energy storage cells (3) and the temperature control unit (4) is formed from the preform (7) by blow molding.

14. The method according to claim 13, **characterized in that** a functional element is formed or arranged in the temperature control unit (4) during the blow molding.

## Revendications

1. Système de stockage d'énergie (1), comprenant un boîtier (2) dans lequel sont disposées plusieurs cellules de stockage d'énergie (3), un dispositif de régulation de température (4) étant disposé dans le boîtier (2), le dispositif de régulation de température (4) étant en contact au moins par sections avec les cellules de stockage d'énergie (3), le dispositif de régulation de température (4) présentant, au moins par sections, une configuration adaptée à la forme des cellules de stockage d'énergie (3), **caractérisé en ce que** le dispositif de régulation de température (4) est réalisé sous la forme d'une pièce moulée par soufflage.

2. Système de stockage d'énergie selon la revendication 1, **caractérisé en ce que** les cellules de stockage d'énergie (3) sont réalisées sous la forme de cellules rondes.

3. Système de stockage d'énergie selon la revendication 1, **caractérisé en ce que** les cellules de stockage d'énergie (3) sont réalisées sous la forme de cellules prismatiques ou de cellules pouch.

4. Système de stockage d'énergie selon l'une des revendications 1 à 3, **caractérisé en ce que** le dispositif de régulation de température (4) présente au moins un conduit d'écoulement (6).

5. Système de stockage d'énergie selon l'une des revendications 1 à 4, **caractérisé en ce que** le dispositif de régulation de température (4) présente des sections de contact (5) qui épousent le contour extérieur des cellules de stockage d'énergie (3).

6. Système de stockage d'énergie selon l'une des revendications 1 à 5, **caractérisé en ce que** le dispositif de régulation de température (4) présente plusieurs conduits d'écoulement (6).

7. Système de stockage d'énergie selon la revendication 6, **caractérisé en ce que** les conduits d'écoulement (6) sont reliés à un collecteur (8) côté entrée et côté sortie.

8. Système de stockage d'énergie selon l'une des revendications 1 à 7, **caractérisé en ce que** le système de stockage d'énergie (1) fait partie d'un véhicule.

9. Système de stockage d'énergie selon la revendication 7 ou 8, **caractérisé en ce que** le collecteur (8) est en liaison opérationnelle avec le circuit de refroidissement d'un véhicule.

10. Système de stockage d'énergie selon l'une des revendications 1 à 9, **caractérisé en ce que** le dispositif de régulation de température (4) est réalisé en forme de méandres.

11. Système de stockage d'énergie selon l'une des revendications 1 à 10, **caractérisé en ce que** le dispositif de régulation de température (4) est réalisé en matière plastique thermoplastique.

12. Véhicule comprenant un entraînement électrique au moins auxiliaire et un système de stockage d'énergie (1) selon l'une des revendications précédentes.

13. Procédé de fabrication d'un système de stockage d'énergie (1), comprenant un boîtier (2) dans lequel sont disposées plusieurs cellules de stockage d'énergie (3), dans lequel des cellules de stockage d'énergie (3) sont disposées dans un boîtier (2), une préforme (7) est ensuite disposée entre les cellules de stockage d'énergie (3) et le dispositif de régulation de température (4) est réalisé par moulage par soufflage à partir de la préforme (7).

14. Procédé selon la revendication 13, **caractérisé en ce que**, pendant le moulage par soufflage, un élément fonctionnel est formé ou disposé dans le dispositif de régulation de température (4).
